# EUROPEAN PATENT APPLICATION

(11) **EP 4 491 052 A1**
(43) Date of publication of application: **15.01.2025**
(21) Application number: 22930945.5
(22) Date of filing: 11.03.2022
(51) Int. Cl.: A41H 37/10

(54) **BUTTON REMOVAL JIG**

(71) Applicant: YKK CORPORATION, Chiyoda-ku Tokyo 101-8642 (JP)
(72) Inventor: HAYASHI,Daisuke, Kurobe-shi, Toyama 938-8601 (JP); SHIMIZU,Noboru, Kurobe-shi, Toyama 938-8601 (JP); FUNAMIZU,Masahiro, Kurobe-shi, Toyama 938-8601 (JP); TAKAMURA,Yoshio, Kurobe-shi, Toyama 938-8601 (JP); SHIMIZU,Toru, Kurobe-shi, Toyama 938-8601 (JP)
(74) Representative: Casalonga
(86) International application number: PCT/JP2022/011091
(87) International publication number: WO 2023/170965

(57) **Abstract**

The present invention is provide a button removal jig, which can disassemble a button into plural parts when the button attached to a fabric is removed from the fabric. The present invention relates to a button removal jig (100) for removing a button (1) from a fabric (f) to which a fixing member (10) attaches the button (1), the button (1) being composed of multiple parts. The button removal jig (100) comprises: a base (110); a press receiving portion (120) arranged above the base (110) and descending from an initial position when it is pressed; a separation plate (130) arranged below the base (110) and ascending and descending together with the press receiving portion (120); and a deformation-applying portion (140) extending downward from the press receiving portion (120) for deforming the button (1). The base (110) includes a first button placing portion (150) for placing the button (1, 1C, 1D). The separation plate (130) includes a second button placing portion (160), which is provided at a position corresponding to the first button placing portion (150).

## Description

### TECHNICAL FIELD

The present invention relates to a button removal jig, and more particularly to a jig for removing a button composed of multiple parts from a fabric to which a fixing member attaches the button.

### BACKGROUND ART

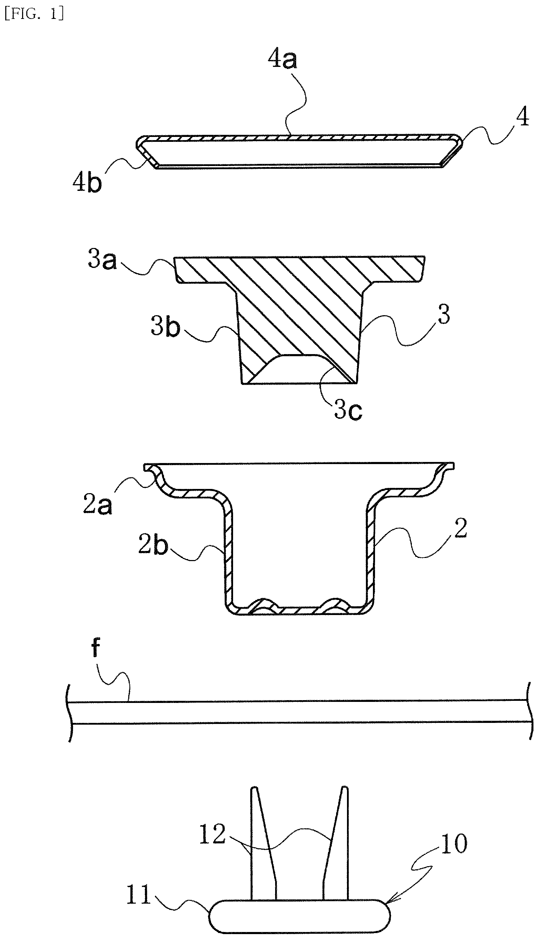

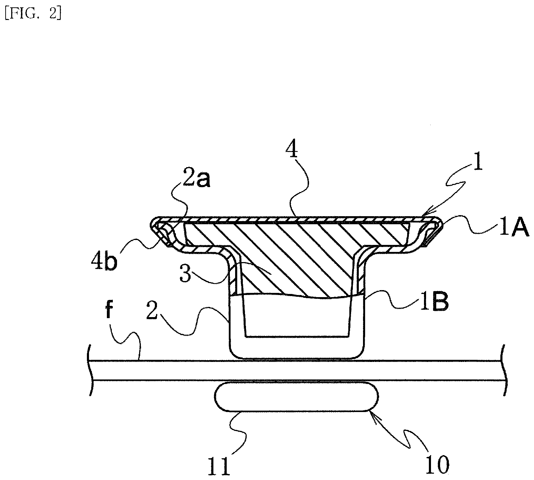

Buttons made up of multiple parts, such as tuck buttons used on jeans and denim jackets, are known. FIG. 1 is a cross-sectional view showing an example of such a button in an exploded state, also showing a fabric f and a fixing member 10. FIG. 2 is a cross-sectional view showing a state in which the button 1 is attached to the fabric f by the fixing member 10. The button 1 comprises a body 2, which is an outer shell member, an insert 3 housed in the body 2, and a cap 4, which closes a body head 2a of the body 2 housing the insert 3. The button 1 (see FIG. 2) in a state in which the body 2, the insert 3, and the cap 4 are assembled includes a head portion 1A having a relatively greater diameter and a barrel portion 1B having a smaller diameter than the head portion 1A. The body 2 has a body barrel 2b, which forms an outer shell of the barrel portion 1B, and a body head 2a, which forms an outer shell below the head portion 1A. The insert 3 includes an insert head 3a and an insert body 3b, and has a recess 3c recessed upward from a bottom surface of the insert body 3b. The cap 4 includes a disk portion 4a and a peripheral side portion 4b extending obliquely downward and radially inward from the radially outer end of the disk portion 4a. The button 1 is assembled by crimping the peripheral side portion 4b of the cap 4 to the body head 2a of the body 2 housing the insert 3.

The fixing member 10 shown in Figs. 1 and 2 includes a disk-shaped base portion 11 and two pins 12, as an example, extending from the base portion 11. The diameter of the base portion 11 is slightly greater than the diameter of the barrel portion 1B of the button 1. The two pins 12 of the fixing member penetrate upward through the fabric f, and further penetrate the bottom plate of the body 2 of the button 1, and then is plastically deformed in the recess 3c. Thereby, the button 1 is attached to the material f.

A button attached to the fabric of clothing and the like may be removed from the fabric in order to replace the button or recycle the clothing and the button. Examples of button removal apparatuses used in this case are disclosed in Japanese Utility Model Application Publication No. S55-87326 (Patent Document 1), Japanese Utility Model Application Publication No. S64-20209 (Patent Document 2), Japanese Utility Model Examined Publication No. H2-32653 (Patent Document 3), Chinese Utility Model No. 210551789 (Patent Document 4) Specification, etc.

After a button made up of multiple parts is removed from a fabric using the button removal apparatuses described in the above patent documents, there are cases where the button needs to be further disassembled for recycling, etc. The inventors have focused on this point and arrived at the present invention.

### CITATION LIST

### Patent Literatures

Patent Document 1: Japanese Utility Model Application Publication No. S55-87326
Patent Document 2: Japanese Utility Model Application Publication No. S64-20209
Patent Document 3: Japanese Utility Model Examined Publication No. H2-32653
Patent Document 4: China Utility Model No. 210551789 Specification

### SUMMARY OF THE INVENTION

### Technical Problem

An object of the present invention is to provide a button removal jig, which can disassemble a button into plural parts when the button attached to a fabric is removed from the fabric.

### Solution to Problem

According to one aspect of the present invention, there is provided a button removal jig for removing a button from a fabric to which a fixing member attaches the button, the button being composed of multiple parts, the button removal jig comprising: a base; a press receiving portion arranged above the base and descending from an initial position when it is pressed; a separation plate arranged below the base and ascending and descending together with the press receiving portion; and a deformation-applying portion extending downward from the press receiving portion for deforming the button, wherein the base includes a first button placing portion for placing the button, and wherein the separation plate includes a second button placing portion, which is provided at a position corresponding to the first button placing portion.

The button removal jig (jig) according to the present invention is used as follows. First, the button attached to the fabric by the fixing member is placed in the first button placing portion of the base and the second button placing portion of the separation plate. At this time, the second button placing portion of the separation plate in its initial position overlaps under the first button placing portion of the base. The fabric is placed with its button side surface on top and the other side (lower side) surface along the lower surface of the separation plate. The base portion of the fixing member is on the other side surface of the fabric. Next, a downward press is applied to the press receiving portion by a press machine or the like. This causes the press receiving portion to descend from the initial position, and accordingly the separation plate also descends. Therefore, the second button placing portion of the separation plate displaces downward with respect to the first button placing portion of the base, which is immovable in the vertical direction. This causes the separation plate to push the fabric downward while pulling the fixing member downward, but the button gets caught on the first button placing portion of the base. This causes the fixing member to separate from the button, and the button to be removed from the fabric. At the same time, the deformation-applying portion also descends together with the press receiving portion, and the deformation-applying portion strikes the button placed in the first button placing portion of the base, deforming the button, thereby disassembling the button into its multiple parts.

Buttons and fixing members to be removed from a fabric by the button removal jig according to the present invention are shown in Figs. 1, 2, 14 and 15, but these are merely examples and are not limited thereto. The base, the press receiving portion, the separation plate, the deformation-applying portion, etc. of the jig can be made of metal, resin, etc. having a certain level of strength.

In one embodiment of the present invention, the first button placing portion includes a wide portion having a spacing greater than the diameter of a head portion of the button, and a narrow portion having a spacing smaller than the diameter of the head portion and greater than the diameter of a barrel portion of the button. When the fixing member is pulled downward by the separation plate, the head portion of the button placed in the first button placing portion of the base is caught between the wide portion and the narrow portion of the first button placing portion (that is, a step portion). Thereby, the button is prevented from displacing downward. As a result, the fixing member is pulled downward away from the button and separated from the button.

In one embodiment of the present invention, the second button placing portion includes a second narrow portion having a distance smaller than the diameter of the head portion of the button, greater than the diameter of the barrel portion of the button, and smaller than the diameter of the base portion of the fixing member. When the separation plate descends, left and right edges, of the separation plate, defining the second narrow portion catch on the base portion of the fixing member via the fabric, functioning to push the base portion downward.

In one embodiment of the present invention, the base includes a base body and a button placing member, which is replaceably attached to the base body, and wherein the first button placing portion is formed in the button placing member. Thereby, the jig can be applied to multiple types of buttons by preparing multiple types of button placing members having different dimensions of the first button placing portion and selecting and attaching an appropriate button placing member to the base body depending on the dimension, etc. of a button to be removed from a fabric.

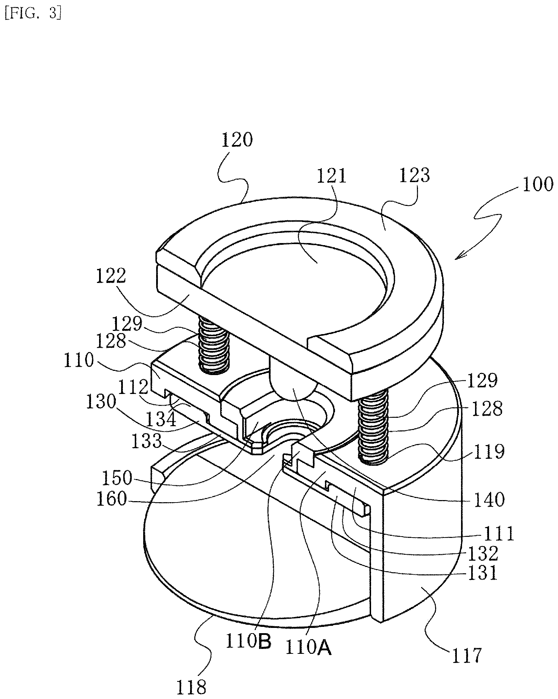

In one embodiment of the present invention, the press receiving portion and the separation plate are connected by a plurality of connecting bars, wherein the base has through-holes through which the connecting bars pass respectively, and wherein a spring is wound around each connecting bar between the base and the press receiving portion. This embodiment will be described later with reference to Fig. 3, etc.

According to another aspect of the present invention, there is provided a button removal jig for removing a button from a fabric to which a fixing member attaches the button, the button removal jig comprising: a base; a press receiving portion arranged above the base and descending from an initial position when it is pressed; and a separation plate arranged below the base and ascending and descending together with the press receiving portion; wherein the base includes a first button placing portion for placing the button, and wherein the separation plate includes a second button placing portion, which is provided at a position corresponding to the first button placing portion. This jig differs from the above-mentioned jig in that it does not include a deformation-applying portion. Since this jig does not include a deformation-applying portion, it does not deform or disassemble the button, but only separates the fixing member from the button by the separation plate.

### Advantageous Effects of Invention

In the present invention, a button attached to the fabric by a fixing member is placed in the first button placing portion of the base and the second button placing portion of the separation plate, and the separation plate is lowered by applying a press force to the press receiving portion, thereby separating the fixing member from the button and deforming the button by the deformation-applying portion, disassembling the button into its parts.

### BRIEF DESCRIPTION OF THE DRAWINGS

FIG. 1 is a cross-sectional view showing an example of a button made up of multiple parts in an exploded state, also showing a fabric and a fixing member.
FIG. 2 is a cross-sectional view showing a state in which the button is attached to the fabric with the fixing member.
FIG. 3 is a perspective view of a button removal jig according to a first embodiment of the present invention.
FIG. 4 is a perspective view showing a state in which the button removal jig is set on a press machine.
FIG. 5 is a front view showing a first button placing portion and a second button placing portion with a base cut away.
FIG. 6 is a front view showing the button removal jig in an initial state in which the button and the fixing member attached to the fabric are placed in the first button placing portion and the second button placing portion.
FIG. 7 is a front view showing the button removal jig in a state in which a second plate and a deformation-applying portion have been lowered to the lowest operating position from the state shown in FIG. 6.
FIG. 8 is an enlarged view of the dashed-line enclosure C in FIG. 7.
FIG. 9 is a perspective view showing a second embodiment of the button removal jig according to the present invention.
FIG. 10 is a perspective view showing a third embodiment of the button removal jig according to the present invention.
FIG. 11 is a perspective view showing a modified example of the deformation-applying portion.
FIG. 12 is a perspective view showing a further modified example of the deformation-applying portion.
FIG. 13 is a front view showing a state in which the deformation-applying portion has been lowered to just before the lowest position.
FIG. 14 is a partial cross-sectional, exploded view showing another example of a button made up of multiple parts, showing a fabric and a fixing member.
FIG. 15 is a partial cross-sectional view showing yet another example of a button made of multiple parts, showing a fabric and a fixing member.

### DESCRIPTION OF EMBODIMENTS

Hereinafter, embodiments of the present invention will be described with reference to the drawings, but the present invention is not limited to such embodiments, and modifications are possible within the scope of the claims. FIG. 3 is a perspective view of a button removal jig (hereinafter, also simply referred to as a "jig") 100 according to a first embodiment of the present invention. The jig 100 comprises a base 110, a first plate 120 as a press receiving portion arranged above the base 110, a second plate 130 as a separation plate arranged below the base 110, a deformation-applying portion 140 extending downward from the first plate 120, a first button placing portion 150 provided in the base 110, and a second button placing portion 160 provided in the second plate 130. The base 110 is supported by a stand 117. The base 110, the first plate 120, and the second plate 130 are arranged substantially horizontally. In FIG. 3, the jig 100 is in an initial state in which the first plate 120 is not pressed, and the first plate 120 and the second plate 130 are in their uppermost initial positions.

The first plate 120 and the second plate 130 are connected in parallel with a predetermined vertical interval by a plurality of connecting bars 129. In this example, the number of the connecting bars 129 is three, but it may be four or more. The base 110 is provided with through-holes 119 through which the connecting bars 129 pass respectively. A coil-shaped compression spring 128 is wound around each connecting bar 129 between the base 110 and the first plate 120. The compression spring 128 lifts and supports the first plate 120 to the initial position relative to the base 110 in an initial state. When the first plate 120 is in the initial position, the second plate 130 is also in the uppermost initial position in contact with the base 110. At this time, the second plate 130 overlaps under the base 110. The first plate 120 descends from the initial position by receiving a press on its upper surface 121 from a press machine 200 or the like described later. At this time, the first plate 120 compresses the compression springs 128 between it and the base 110. Each through-hole 119 of the base 110 guides each connecting bar 129 in the vertical direction, so that the first plate 120 moves up and down while maintaining its horizontal position. The second plate 130 ascends and descends together with the first plate 120. A gap between the first plate 120 and the second plate 130 is always constant, including when they move up and down. The base 110 is immovable in the vertical direction and is maintained at the same height position.

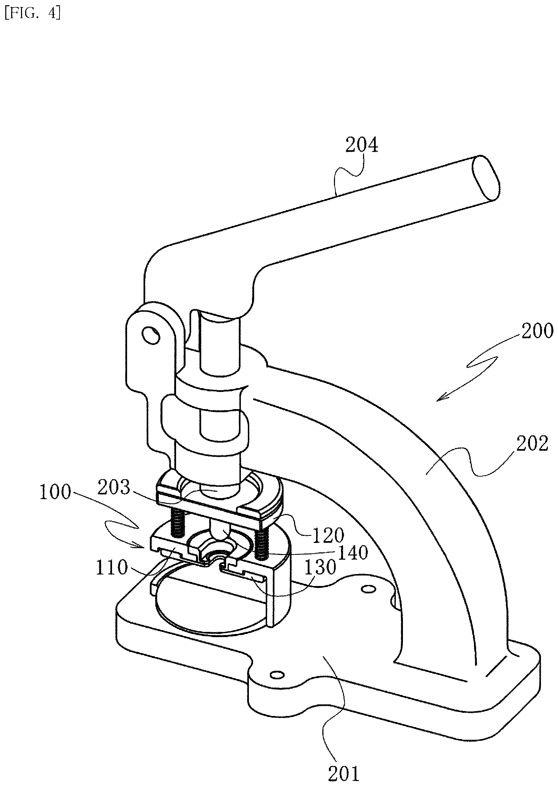

FIG. 4 is a perspective view showing a state in which the jig 100 is set on a press machine 200. The press machine 200 is a device for applying a press force of a certain level or more to the first plate 120 of the jig 100. A commercially available hand press or the like can be used as the press machine 200, but not limited thereto. The press machine 200 is a known device and will not be described in detail, but it comprises a table 201, a main body 202 that rises in a curved shape from the table 201, a core rod 203 provided at an end of the main body 202 opposite to the table 201, and a lever 204 for lowering the core rod 203 from an initial position. Although not shown, a spring is wound around the core rod 203. The jig 100 is placed on the table 201 of the press machine 200. When an operator pushes down the lever 204, the core rod 203 descends, and thereby the first plate 120 of the jig 100 can be pressed down. When the lever 204 is released from being pushed down, the core rod 203 returns upward to its initial position by the force of the spring.

The first plate 120 is a plate shape in which a part of a circle is removed along a straight line shorter than its diameter, and is greater than a semicircle. The first plate 120 has an upper surface 121 and a linear side surface 122. In this specification, the linear side surface 122 of the first plate 120 is the front surface of the jig 100. A reinforcing member 123 is provided on the upper surface 121 of the first plate 120 along its arcuate outer portion. The base 110 and the second plate 130 have approximately the same outer shape as the first plate 120, and have linear side surfaces 111 and 131, which form the front surface of the jig 100. The second plate 130 has a smaller thickness along the vertical direction than the base 110 and the first plate 120. The second plate 130 has a flat lower surface 132. The second plate 130 also has a central, thin portion 133 and a thick portion 134 in an arcuate outer portion of the thin portion 133. The upper surface of the second plate 130 is higher in the thick portion 134 than in the thin portion 133. The lower end of the connecting bar 129 is connected to the thick portion 134 of the second plate 130. The base 110 includes an arcuate recess 112 recessed upward from its lower surface to receive the thick portion 134 of the second plate 130 in the initial position.

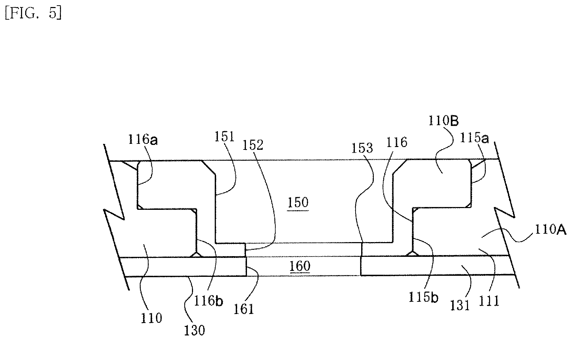

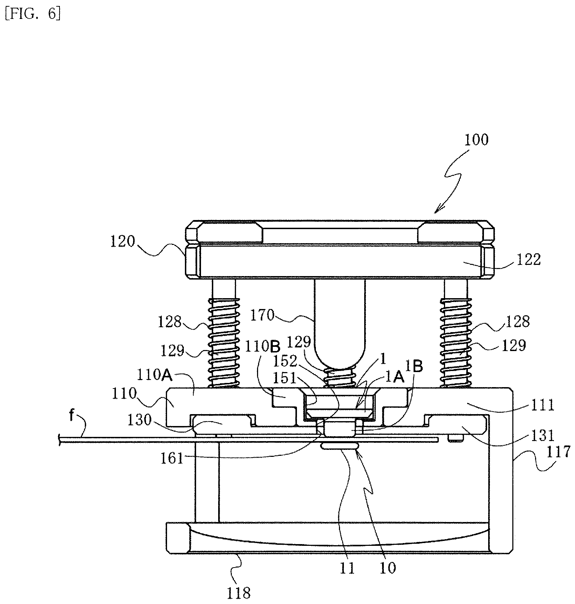

The base 110 includes a first button placing portion 150, and the second plate 130 includes a second button placing portion 160. Hereinafter, the button 1 and the fixing member 10 shown in Figs. 1 and 2 will be described and cited as an example of buttons and fixing members to be removed from the fabric by the jig 100. However, other buttons and fixing members including buttons 1C, 1D and fixing members 10A, 10B described later can be objects. Fig. 5 is a front view showing the first button placing portion 150 and the second button placing portion 160 with the base 110 cut away. The first button placing portion 150 is cut out in a substantially semi-elliptical or inverted U-shape rearward (from the front to the back in Figs. 5, 6, etc.; the same applies below) from the linear side surface 111 of the base 110 at a middle area in the left-and-right direction (left and right are based on Figs. 5, 6, etc.; the same applies below) of the linear side surface 111. The first button placing portion 150 penetrates the base 110 vertically. The first button placing portion 150 includes a wide portion 151 for positioning the head portion 1A of the button 1, and a first narrow portion 152 provided below the wide portion 151 for positioning the barrel portion 1B of the button 1. A step portion 153 is formed at the boundary between the wide portion 151 and the first narrow portion 152. A left-right spacing of the wide portion 151 is set to be greater than the diameter of the head portion 1A of the button 1. A left-right spacing of the first narrow portion 152 is set to be smaller than the diameter of the head portion 1A of the button 1 and slightly greater than the diameter of the barrel portion 1B. The wide portion 151, the first narrow portion 152 and the step portion 153 form on the rear side, respectively, a large-diameter side surface, a small-diameter side surface and a step portion, which are semicircular and convex rearward.

In this embodiment, the base 110 comprises a base body 110A and a button placing member 110B, which is replaceably attached to the base body 110A. The above-mentioned first button placing portion 150 is formed in the button placing member 110B. Multiple types of button placing members 150B having different dimensions are prepared, and among them an appropriate button placing member 150B is selected according to dimensions, etc. of a button to be removed from a fabric and attached to the base body 110A. Thereby, the jig 100 can be applied to multiple types of buttons. Referring to FIG. 5, the base body 110A includes a receiving portion 116 for receiving the button placing member 110B from above. The receiving portion 116 is a space formed by enlarging the first button placing portion 150, and includes an upper large diameter portion 116a and a lower small diameter portion 116b. The button placing member 110B has an outer shape that generally matches the receiving portion 116. That is, the button placing member 110B includes an upper large diameter portion 115a that matches the large diameter portion 116a and a lower small diameter portion 115b that matches the small diameter portion 116b. Multiple types of button placing members 110B has a common outer shape, that is, the large diameter portion 115a and the small diameter portion 115b in common. Note that the first button placing portion 150 can also be provided directly to the base 110, which will be described later.

The second button placing portion 160 is cut out in a substantially semi-elliptical or inverted U-shape rearward from a left-right middle area of the linear side surface 131 of the second plate 130, penetrating the second plate 130 vertically. The second button placing portion 160 includes a second narrow portion 161. The left-right spacing of the second narrow portion 161 is set to be smaller than the diameter of the head portion 1A of the button 1; slightly greater than the diameter of the barrel portion 1B; and slightly smaller than the diameter of the base portion 11 of the fixing member 10. Also, referring to FIG. 5, the total thickness in the vertical direction of the first narrow portion 152 and the second narrow portion 161, which are overlapped vertically in the initial state, is set to be smaller than the axial length of the barrel portion 1B of the button 1. The second narrow portion 161 forms on the rear side a semicircular side surface, which is convex rearward.

The stand 117 supporting the base 110 extends and curves along the arcuate outer periphery of the base 110, and it is partially open on the left side. Further, the stand 117 is also open frontward or on the linear side surface 111-side of the base 110. The fabric f with the button 1 attached thereto is introduced from the front and left openings, and the button 1 is placed in the first button placing portion 150 and the second button placing portion 160. A circular bottom plate 118 is provided on the bottom inside of the stand 117. The bottom plate 118 protrudes forward from the linear side surface 111 of the base 110. The bottom plate 118 also becomes gradually thinner frontward from the middle in the front-and-rear direction, and the front half of the upper surface of the bottom plate 118 is inclined towards its front end. Thereby, when the button 1 is disassembled into the parts, namely, the body 2, the insert 3 and the cap 4 as described later, they are easily ejected forward.

The deformation-applying portion 140 is a columnar member extending downward from the center of the arcuate outer periphery of the first plate 120. In this embodiment, a lower end of the deformation-applying portion 140 is substantially hemispherical. The axis of the deformation-applying portion 140 is concentric with the left-right midpoint of, and with the center of the rear, arcuate side surface of, the first button placing portion 150 and the second button placing portion 160. Thereby, when the first plate 120 descends, the deformation-applying portion 140 abuts against the center of the cap 4 of the button 1 placed in the first button placing portion 150 and the second button placing portion 160.

Fig. 6 is a front view showing the jig 100 in the initial state in which the button 1 and the fixing member 10 attached to the fabric f are placed in the first button placing portion 150 and the second button placing portion 160. The fabric f is introduced from the front and left openings of the stand 117 with the button 1-side upward and the fixing member 10-side downward. The head portion 1A of the button 1 is placed in the wide portion 151 of the first button placing portion 150, and the barrel portion 1B is placed in the first narrow portion 152 of the first button placing portion 150 and the second narrow portion 161 of the second button placing portion 160. At this time, the button 1 is pushed to the rear ends of the first button placing portion 150 and the second button placing portion 160. The fabric f is also placed along the lower surface of the second plate 130. When an operator pushes down the lever 204 of the press machine 200 from the state shown in Fig. 6, the core rod 203 descends. Thereby, a press is applied from above to the first plate 120 of the jig 100, and the first plate 120 is pressed down. Accordingly, the second plate 130 also descends, and each compression spring 128 is compressed between the first plate 120 descending and the stationary base 110.

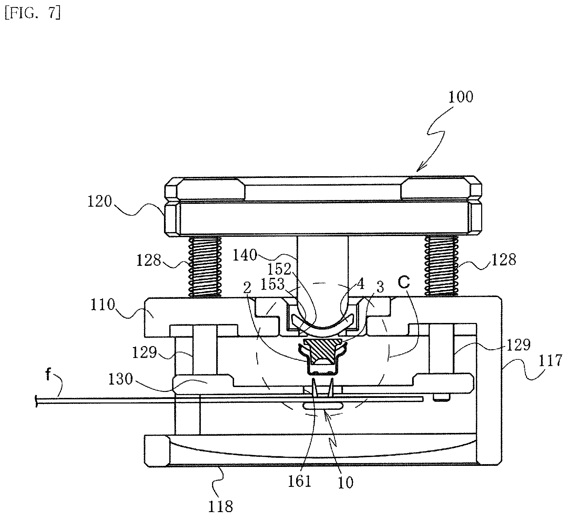

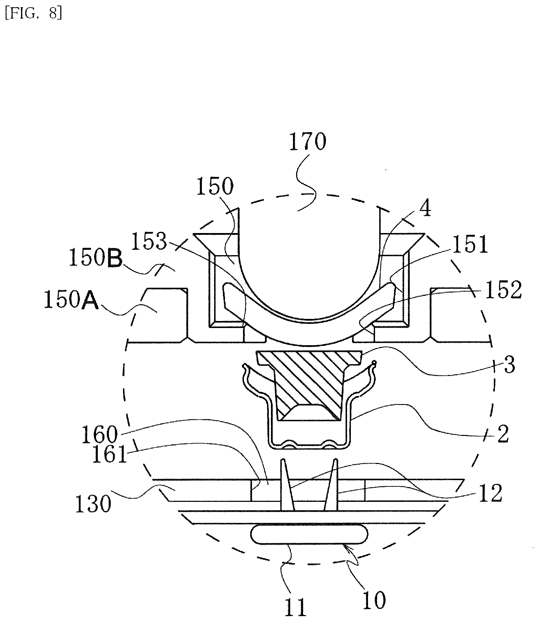

Fig. 7 is a front view showing the jig 100 in a state in which the second plate 130 and the deformation-applying portion 140 have been lowered to the lowest operating position from the state shown in Fig. 6. Fig. 8 is an enlarged view of the dashed-line enclosure C in Fig. 7. In a change of the jig 100 from Fig. 6 to Fig. 7 and Fig. 8, as will be described below, the fixing member 10 is pulled downward from the button 1 by the second plate 130, and almost simultaneously, the button 1 is deformed by the deformation-applying portion 140. Thereby, the button 1 is disassembled into the body 2, the insert 3 and the cap 4. When the second plate 130 descends together with the pressed first plate 120, the fabric f is also pushed downward by the second plate 130, and the base portion 11 of the fixing member 10 on the underside of the fabric f is pulled downward by the second plate 130. At this time, since the left-right spacing of the second narrow portion 161 of the second button placing portion 160 in the second plate 130 is smaller than the diameter of the base portion 11 of the fixing member 10, the left and right edges of the second plate 130 that define the second narrow portion 161 are caught on the base portion 11 via the fabric f, and function to push down the base portion 11. On the other hand, the button 1 placed in the first button placing portion 150 of the stationary base 110 is also pulled downward by the fixing member 10 that is pulled downward. However, the head portion 1A placed in the wide portion 151 is caught on the step portion 153 until just before the descending deformation-applying portion 140 comes in contact with the button 1, and thereby the button 1 is prevented from displacing downward. As a result, the fixing member 10 is pulled downward away from the button 1 and separated from the button 1. At this time, the pin 12 of the fixing member 10 that was connected to the button 1 in a curved shape is deformed into a straight shape and comes off the button 1.

Almost at the same time that the fixing member 10 is pulled away from the button 1, the hemispherical lower end of the deformation-applying portion 140, which descends together with the first plate 120, strikes the cap 4, from its center, of the button 1 placed in the first button placing portion 150 of the base 110. Thereby, the center of the cap 4 is pressed downward while the radially outer portion of the cap 4 is caught on the step portion 153 of the first button placing portion 150, so that the cap 4 is deformed and its center enters the first narrow portion 152. Thereby, the connection between the cap 4 and the body 2 is released and then the body 2 and the insert 3 fall from the first button placing portion 150. These body 2 and insert 3 are ejected forward from the bottom plate 118. After that, when the lever 204 of the press machine 200 is released from being pushed down, the core rod 203 returns to its initial position, and the first plate 120 of the jig 100 returns to its initial position due to restoration of the compression springs 128. Further, at the same time, the second plate 130 also returns to its initial position.

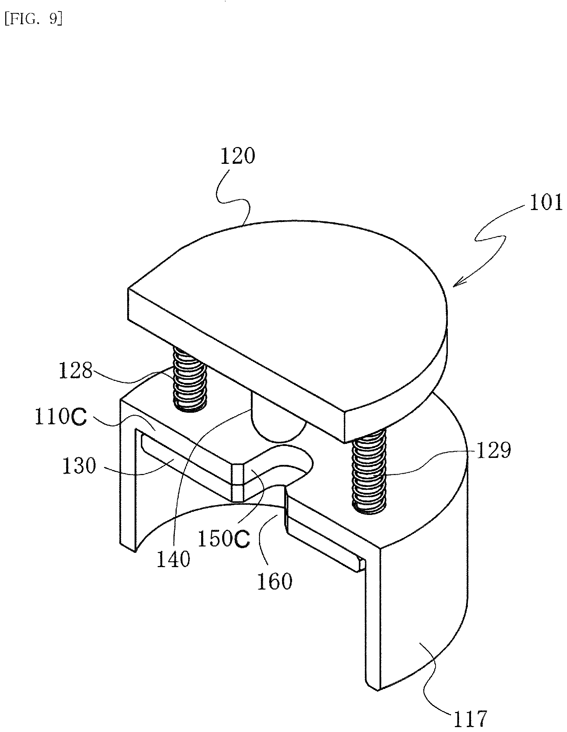

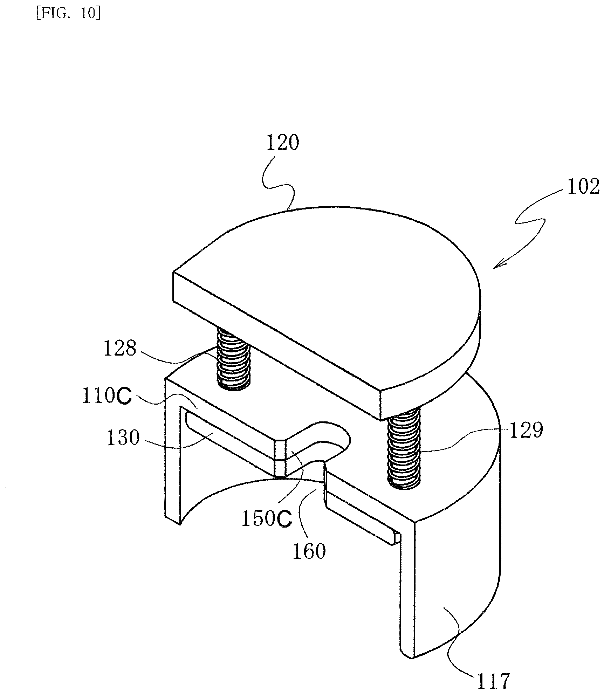

Fig. 9 is a perspective view showing a second embodiment of the button removal jig according to the present invention. The jig 101 shown in Fig. 9 is different from the jig 100 of the first embodiment mainly in that the base 110C is not divided into a base body and a button placing member. In this case, the first button placing portion 150C is provided directly in the base 110C. As to the configuration other than the base 110C, the jig 101 is substantially the same as the jig 100, the same reference numbers are used and their descriptions are omitted. In Fig. 9 and Fig. 10, the recess 112 of the base 110, the reinforcing member 123 of the first plate 120, the thin portion 133 of the second plate 130, the wide portion 151 and the first narrow portion 152 of the first button placing portion 150, the left opening the bottom plate 118 of the stand 117, etc. are omitted.

Fig. 10 is a perspective view showing a third embodiment of the button removal jig according to the present invention. The jig 102 shown in FIG. 10 differs from the jig 100 of the first embodiment in that the base 110C is not divided into a base body and a button placing member as in the jig 101 in FIG. 9, and that the jig 102 does not include a deformation-applying portion. Although not shown, the base 110C of the jig 102 may be divided into a base body and a button placing member as in the jig 100. That is, the third embodiment may be the jig 100 in which the deformation-applying portion 140 is removed. In the jig 102, the button 1 is not deformed or disassembled by a deformation-applying portion, but the button 1 is merely separated from the fixing member 10 by the second plate 130. Therefore, a button to be removed from a fabric by the jig 102 is not limited to a button 1, which is made up of multiple parts, but may be a button made up of a single part. An operation separating the fixing member 10 using the jig 102 is extremely easy since it only requires placing the button 1 attached to the fabric f in the first button placing portion 150C and the second button placing portion 160 and pushing down the lever 204 of the press machine 200.

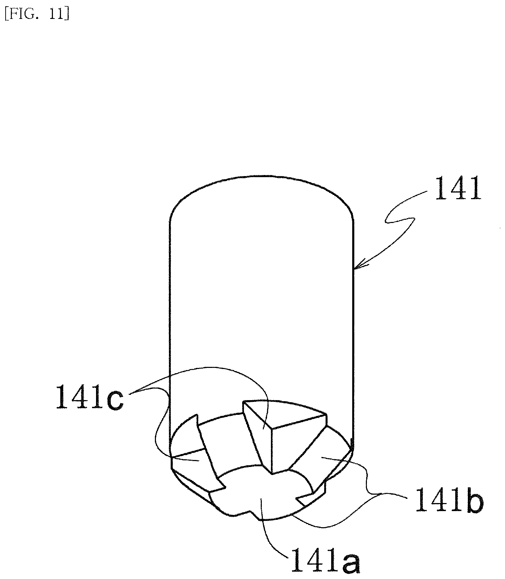

The deformation-applying portion 140 in the jigs 100 and 101 described above has a hemispherical lower end, but is not limited thereto. Fig. 11 is a perspective view showing a modified example of the deformation-applying portion. The deformation-applying portion 141 shown in Fig. 11 has an end surface 141a that is flat, or is slightly curved, convex downward; a tapered portion 141b whose outer diameter gradually decreases toward the lower end surface 141a; and four recesses 141c provided at equal intervals around the periphery of the tapered portions 141b. The deformation-applying portion 141 can also deform and disassemble the button 1 in the same manner as the deformation-applying portion 140.

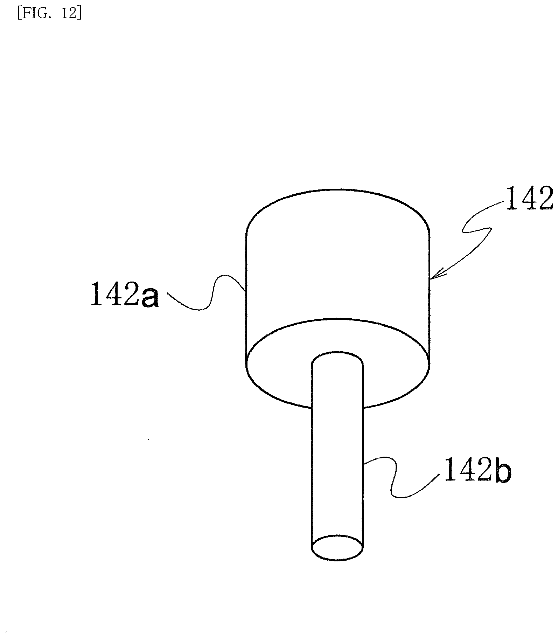

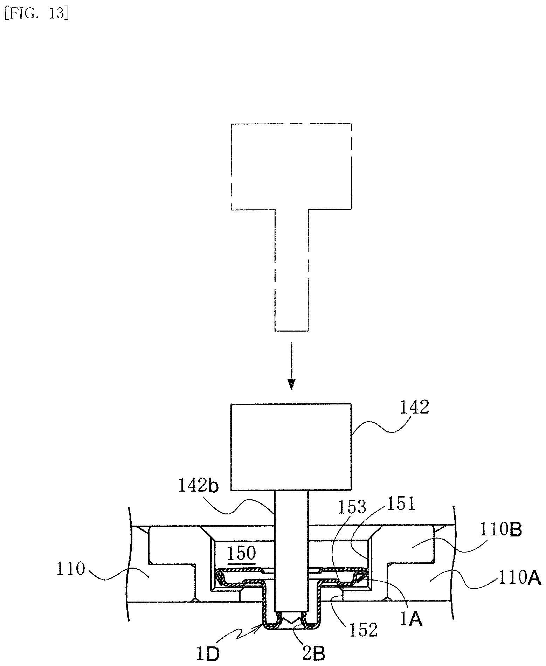

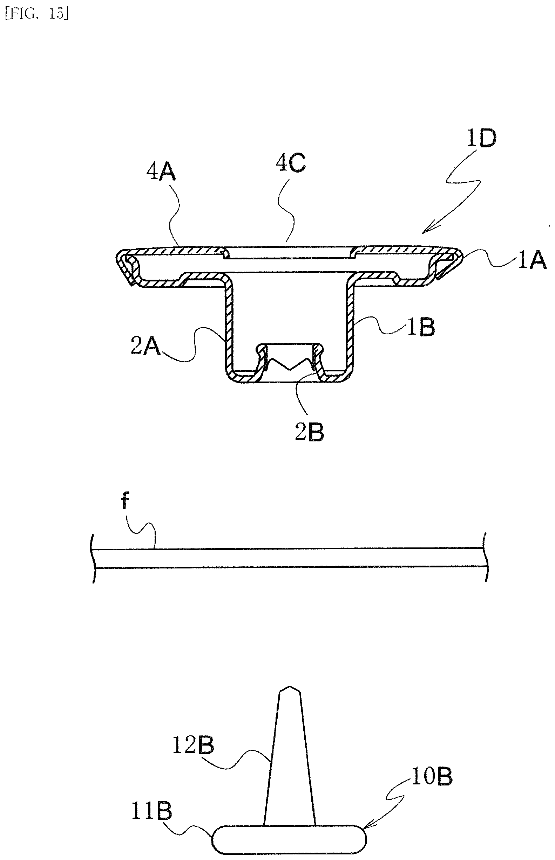

FIG. 12 is a perspective view showing a further modified example of the deformation-applying portion. The deformation-applying portion 142 shown in FIG. 12 includes a columnar portion 142a and a shaft portion 142b extending concentrically downward from the columnar portion 142a. The shaft portion 142b has a cylindrical shape with a smaller diameter than the base portion 142a. FIG. 13 is a front view showing a state in which the deformation-applying portion 142 has been lowered to just before the lowest position. The deformation-applying portion 142 is provided in the first plate 120 of the jig 100 in place of the deformation-applying portion 140. In FIG. 13, the first plate 120, the second plate 130, etc. are omitted. A button 1D is placed in the first button placing portion 150 of the base 110 (and in the second button placing portion 160 of the second plate 130). The button 1D is shown in a cross-section in FIG. 15 and is composed of two parts, a body 2A and a cap 4A. The body 2A includes a pin receiving portion 2B that is bent upward from its bottom. The cap 4A has an opening 4C, at its center, that is open. The button 1D is fixed to the fabric f by a fixing member 10B. The fixing member 10B has one pin 12B. The pin 12B penetrates the fabric f, passes through the pin receiving portion 2B of the button 1D, and is then swaged.

At the time shown in Fig. 13, the fixing member 10B (see Fig. 15) has been separated from the button 1D by second plate 130, and the shaft portion 142b of the deformation-applying portion 142 has entered inside the button 1D through the opening 4C. The shaft portion 142b then descends further, pressing the body 2A downward from the pin receiving portion 2B. At this time, body 2A deforms from the part caught on the step portion 153, and then is separated from the cap 4A. In this manner, the button 1D can be disassembled by the deformation-applying portion 142.

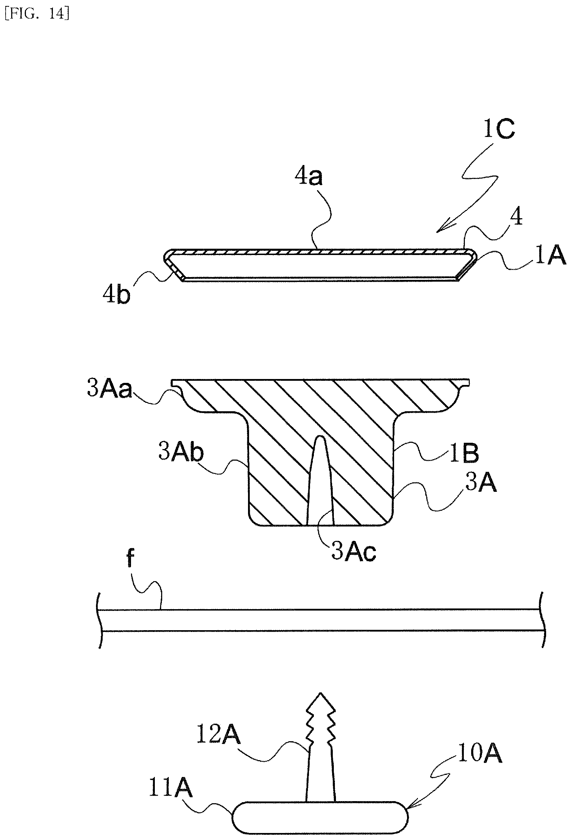

FIG. 14 is a partial cross-sectional, exploded view showing another example of a button made up of multiple parts. The button 1C shown in FIG. 14 is made up of two parts, a body 3A and a cap 4. The cap 4 is substantially the same as the cap 4 of the button 1, and includes a disk portion 4a and a peripheral side portion 4b. The body 3A has a body head 3Aa and a body barrel 3Ab. The body 3A also has a pin receiving portion 3Ac, which is a cavity extending upward from the bottom surface. The button 1C is formed by crimping the peripheral side portion 4b of the cap 4 onto the body head 3Aa of the body 3A. As with the button 1, the button 1C also includes a head portion 1A and a barrel portion 1B having a smaller diameter than the head portion 1A. For convenience, as to the buttons 1C and 1D (see FIG. 15), the head portion and the barrel portion are also designated by the reference numbers 1A and 1B, respectively. The fixing member 10A includes a base portion 11A and one pin 12A extending from the base portion 11A. The pin 12A has a thread groove formed at its tip. As with the button 1, the button 1C can also be separated from the fabric f and the fixing member 10A by using the jigs 100, 101, 102. Further, the button 1C can also be disassembled by using the jig 100, 101.

FIG. 15 is a partial cross-sectional view showing yet another example of a button made up of multiple parts, showing also the fabric f and the fixing member 10B. The button 1D shown in FIG. 15 is made up of two parts, the body 2A and the cap 4A. As described above, the body 2A includes a pin receiving portion 2B bent upward from the bottom. The body 2A has almost the same shape as the body 2 of the button 1, except for the pin receiving portion 2B. The cap 4A is open in the center as an opening 4C. The cap 4A has almost the same shape as the cap 4 of the button 1, except for the opening 4C. The button 1D is fixed to the fabric f by the fixing member 10B. The fixing member 10B includes one pin 12B. The pin 12B penetrates the fabric f, passes through the pin receiving portion 2B of the button 1D, and is then swaged. Thereby the button 1D is fixed to the fabric f. As with the button 1, the button 1D can be separated from the fabric f and the fixing member 10B by using the jig 100, 101, 102. Further, the button 1D can be disassembled by the jig 100, 101, particularly jig 100, 101 provided with the deformation-applying portion 142.

### DESCRIPTION OF REFERENCE NUMERALS

1, 1C, 1D button
1A head portion
1B barrel portion
10, 10A, 10B fixing member
11, 11A, 11B base portion
100, 101, 102 button removal jig
110, 110C base
110A base body
110B button placing member
119 through-hole
120 press receiving portion (first plate)
128 compression spring
129 connecting bar
130 separation plate (second plate)
140, 141, 142 deformation-applying portion
150, 150C first button placing portion
151 wide portion
152 first narrow portion
153 step portion
160 second button placing portion
161 second narrow portion
200 press machine

## Claims

1. A button removal jig (100, 101) for removing a button (1, 1C, 1D) from a fabric (f) to which a fixing member (10, 10A, 10B) attaches the button (1, 1C, 1D), the button (1, 1C, 1D) being composed of multiple parts, the button removal jig (100, 101) comprising:
a base (110, 110c);
a press receiving portion (120) arranged above the base (110, 110c) and descending from an initial position when it is pressed;
a separation plate (130) arranged below the base (110, 110c) and ascending and descending together with the press receiving portion (120); and
a deformation-applying portion (140, 141, 142) extending downward from the press receiving portion (120) for deforming the button (1, 1C, 1D),
wherein the base (110, 110C) includes a first button placing portion (150, 150C) for placing the button (1, 1C, 1D), and
wherein the separation plate (130) includes a second button placing portion (160), which is provided at a position corresponding to the first button placing portion (150, 150C).

2. The button removal jig according to claim 1, wherein the first button placing portion (150, 150C) includes a wide portion (151) having a spacing greater than the diameter of a head portion (1A) of the button (1, 1C, 1D), and a narrow portion (152) having a spacing smaller than the diameter of the head portion (1A) and greater than the diameter of a barrel portion (1B) of the button.

3. The button removal jig according to claim 1 or 2, wherein the second button placing portion (160) includes a second narrow portion (161) having a spacing smaller than the diameter of the head portion (1A) of the button (1, 1C, 1D), greater than the diameter of the barrel portion (1B) of the button (1, 1C, 1D), and smaller than the diameter of a base portion (11, 11A, 11B) of the fixing member (10, 10A, 10B).

4. The button removal jig according to claim 1 or 2, wherein the base (110) includes a base body (110A) and a button placing member (110B), which is replaceably attached to the base body (1 10A), and wherein the first button placing portion (150) is formed in the button placing member.

5. The button removal jig according to claim 1 or 2, wherein the press receiving portion (120) and the separation plate (130) are connected by a plurality of connecting bars (129), wherein the base (110) has through-holes through which the connecting bars (129) pass respectively, and wherein a spring (128) is wound around each connecting bar (129) between the base (110) and the press receiving portion (120).

6. A button removal jig (102) for removing a button (1, 1C, 1D) from a fabric (f) to which a fixing member (10, 10A, 10B) attaches the button (1, 1C, 1D), the button removal jig (102) comprising:
a base (110c);
a press receiving portion (120) arranged above the base (110c) and descending from an initial position when it is pressed; and
a separation plate arranged below the base and ascending and descending together with the press receiving portion;
wherein the base includes a first button placing portion (150C) for placing the button, and
wherein the separation plate includes a second button placing portion, which is provided at a position corresponding to the first button placing portion.
